# EUROPEAN PATENT APPLICATION

(11) **EP 3 808 583 A1**
(43) Date of publication of application: **21.04.2021**
(21) Application number: 19204100.2
(22) Date of filing: 18.10.2019
(51) Int. Cl.: B60J 7/12

(54) **TOP HAVING A TOP COVER**

(71) Applicant: Webasto SE, 82131 Stockdorf (DE)
(72) Inventor: LUSSON, Mickaël, 49300 LE PUY SAINT BONNET (FR); GUILLET, Laurent, 79140 CERIZAY (FR)
(74) Representative: advotec.

(57) **Abstract**

A top for a convertible vehicle is proposed, the top comprising a top cover (26), which has an outer canvas (28), a headliner (30) and an insulation layer (32) between the outer canvas (28) and the headliner (30), and a top linkage (20), which has at least one transverse bow (25) to which the top cover (26) is connected via at least one bow strip (36). The bow strip (36) is connected to the insulation layer (32) via an ultrasonic weld.

## Description

The invention relates to a top for a vehicle, in particular for a convertible vehicle, the top having the features of the preamble of claim 1.

A top of this kind is known from practice and constitutes in particular a folding top which can be displaced between a closed position, in which it covers an interior of the vehicle, and a storage position, in which the vehicle interior is uncovered and the top is stored in a rear storage space of the vehicle in question. For being displaced, the top comprises a top linkage by means of which the top cover can be deployed. The top linkage typically comprises a link assembly on either side of a vertical longitudinal center plane of the top, each link assembly being pivotably mounted on a main bearing attached to the vehicle. The two link assemblies are connected to each other by multiple transverse bows. The top cover, which is deployable by means of the top linkage, comprises an outer canvas made of a flexible, foldable and weatherproof material, a headliner, which forms a visible inner surface of the top when the top is deployed, and an insulation layer, which is disposed between the outer canvas and the headliner and which may serve as both noise insulation and thermal insulation. The top cover is connected to the transverse bows. For this purpose, bow strips, which may be sewed to elements of the top cover, are provided, in particular. The seam, however, might be visible through the top cover in an undesired manner. Moreover, the bow strips are known to be connected via a zip to a corresponding flap attached to the outer canvas of the top cover via a high-frequency weld. A weld of this kind might also be visible through the outer canvas, marring the optical appearance. Moreover, the zip requires space.

The object of the invention is to provide a top of the above kind in which a bow strip is connected to the top cover in an optimized manner.

According to the invention, this object is attained by the top having the features of claim 1.

According to the invention, the bow strip is connected to the insulation layer via an ultrasonic weld. The ultrasonic weld formed on the insulation layer cannot be visible through the outer canvas, the bow strip thus not affecting the optical appearance of the top when the top cover is deployed. The bow strip, which is also referred to as a bow flap and runs in the transverse direction of the top, is connected to the respective transverse bow at its end facing away from the ultrasonic weld. This connection can be a clamp connection or take place via a piping which is disposed in a corresponding piping recess of the respective transverse bow.

The top according to the invention can be a convertible top being part of a convertible vehicle and displaceable between a closing position in which a vehicle interior is spanned by the top and a storage position in which the top is stored in a rear storing space of the respective vehicle. Alternatively, the top according to the invention can be a folding roof for closing a vehicle roof opening. Then, the top linkage comprising the at least one transverse bow is a kinematics for displacement of the top between a closing position and an opening position.

In a preferred embodiment of the top according to the invention, the insulation layer is connected to the outer canvas via at least one fixing strip, the fixing strip being connected to the insulation layer via an ultrasonic weld. The ultrasonic weld for connecting the fixing strip to the insulation layer is not visible through the outer canvas of the top cover, either, leaving the appearance of the top unaffected when the top cover is in the deployed state. The fixing strip can run parallel to the bow strip in the transverse direction of the top.

To make production of the top as economical as possible and to reduce the number of method steps, the ultrasonic weld via which the bow strip is connected to the insulation layer and the ultrasonic weld via which the fixing strip is connected to the insulation layer are formed by the same ultrasonic weld seam in an advantageous embodiment of the top according to the invention.

In another specific embodiment of the top according to the invention benefitting the appearance of the top cover at the outside of the top, the fixing strip is glued to the outer canvas. Thus, the fixing strip fixing the insulation layer to the outer canvas is attached to the inside of the outer canvas, in particular by means of an adhesive film made of temperature-resistant glue.

The invention also relates to a convertible vehicle having a top of the kind described above.

Other advantages and advantageous embodiments of the subject-matter of the invention are apparent from the description, the drawing and the claims.

An exemplary embodiment of a convertible vehicle having a top according to the invention is illustrated in a schematically simplified manner in the drawing and will be explained in more detail in the following description.
- Figure 1: is a schematic side view of a convertible vehicle with a folding top in its closed position; and
- Figure 2: is a schematic section through the top in the area of a transverse bow.

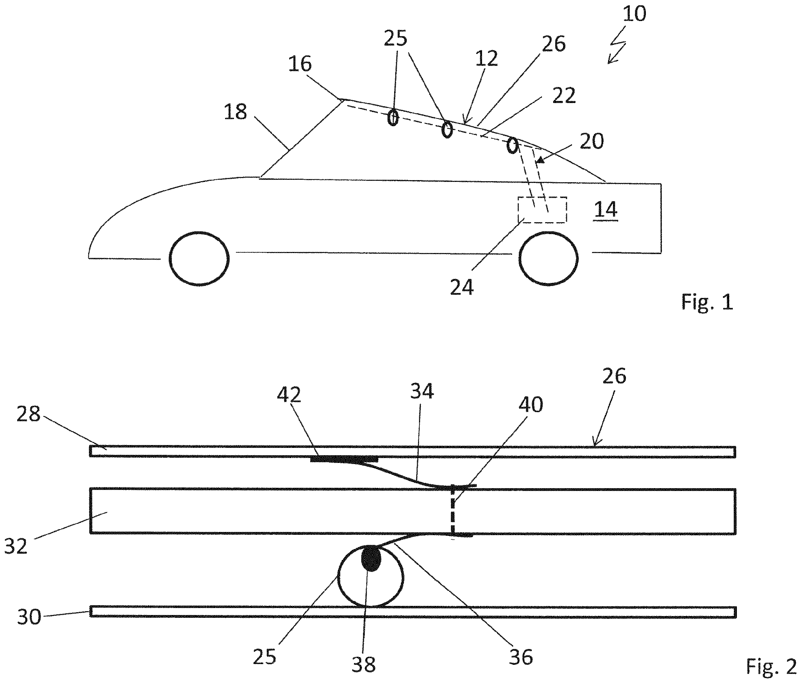

The drawing shows a motor vehicle 10 which is a convertible vehicle and which is equipped with a folding top 12, which forms a vehicle roof and which is displaceable between a closed position, which is illustrated in Figure 1 and in which the vehicle interior is covered, and a storage position (not shown), in which the vehicle interior is uncovered and folding top 12 is stored in a rear storage space 14 of motor vehicle 10. In the closed position, the front edge of folding top 12 is fixed to a front header 16, which is an upper section of a frame of a windshield 18 extending in the transverse direction of vehicle 10.

For being displaced, folding top 12 comprises a top linkage 20 which has a link assembly 22 on either side of a vertical longitudinal center plane of folding top 12, each link assembly 22 being pivotably mounted on a main bearing 24 attached to vehicle 10 or to the body. By means of top linkage 20, a top cover 26, the layering of which is illustrated in detail in Figure 2, can be deployed so as to establish the closed position illustrated in Figure 1.

Top cover 26 comprises an outer canvas 28 made of a waterproof and windproof foldable fabric, a headliner 30, which forms a surface visible from the vehicle interior when folding top 12 is in the closed position, and an insulation layer 32, which is disposed between outer canvas 28 and headliner 30 and serves as noise insulation and thermal insulation for the vehicle interior.

Insulation layer 32 is connected to outer canvas 28 via fixing strips 34, which run in the transverse direction of the motor vehicle 10. Moreover, insulation layer 32 is connected to transverse bows 25 of top linkage 20 via respective bow strips 36. For this purpose, bow strips 36, which run parallel to fixing strips 34 in the transverse direction of the top 12, each have a piping 38 at their ends facing away from insulation layer 32, piping 38 being disposed in a corresponding piping groove of respective transverse bow 25.

Fixing strips 34, which comprise a plastic material, and respective associated bow strips 36, which also comprise a plastic material, are each fixed to insulation layer 32, which comprises plastic foam, via the same ultrasonic welding seam 40. Fixing strips 34 are glued to the inside of outer canvas 28 via an adhesive film 42.

### Reference signs

- 10: motor vehicle
- 12: folding top
- 14: storage space
- 16: header
- 18: windshield
- 20: top linkage
- 22: link assembly
- 24: main bearing
- 25: transverse bow
- 26: top cover
- 28: outer canvas
- 30: headliner
- 32: insulation layer
- 34: fixing strip
- 36: bow strip
- 38: piping
- 40: welding seam
- 42: adhesive film

## Claims

1. A top for a vehicle, in particular for a convertible vehicle, comprising a top cover (26), which has an outer canvas (28), a headliner (30) and an insulation layer (32) between the outer canvas (28) and the headliner (30), and a top linkage (20), which comprises at least one transverse bow (25) to which the top cover (26) is attached via at least one bow strip (36), **characterized in that** the bow strip (36) is connected to the insulation layer (32) via an ultrasonic weld.

2. The top according to claim 1, **characterized in that** the insulation layer (32) is connected to the outer canvas (28) via at least one fixing strip (34) and the fixing strip (34) is connected to the insulation layer (32) via an ultrasonic weld.

3. The top according to claim 2, **characterized in that** the ultrasonic weld via which the bow strip (36) is connected to the insulation layer (32) and the ultrasonic weld via which the fixing strip (34) is connected to the insulation layer (32) are formed by the same ultrasonic welding seam (40).

4. The top according to claim 2 or 3, **characterized in that** the fixing strip (34) is glued to the outer canvas (28).

5. A convertible vehicle, comprising a top according to one of claims 1 to 4.
